# EUROPEAN PATENT APPLICATION

(11) **EP 4 799 462 A1**
(43) Date of publication of application: **02.09.2026**
(21) Application number: 26159708.2
(22) Date of filing: 20.02.2026
(51) Int. Cl.: A01D 34/416

(54) **FILAMENT TRIMMER HEAD**

(30) Priority: 28.02.2025 CN 202510242938
(71) Applicant: Husqvarna AB, 561 82 Huskvarna (SE)
(72) Inventor: Wang, Steven, Qiandeng town, Kunshang city, Jiangsu province (CN); Gao, Keda, Qianwan, Ningbo city, Zhejiang province (CN)
(74) Representative: Finkele, Rolf

(57) **Abstract**

A filament trimmer head **(100)** comprises a spool holder **(102)** with a spool **(104)** mounted inside, covered by a spool cover **(106)** with a circular through hole **(138).** A bump button **(126)** via it's stem **(128)** formed on the upper surface **(122)** of the spool **(104),** extends outward through the circular through hole **(138).** Additionally, a first coupling feature **(130)** formed on the upper surface **(122)** of the spool **(104)** extends towards the bump button **(126).** The filament trimmer head **(100)** is characterized in that a seal **(134)** is configured to engage and surround the stem **(128)** of the bump button **(126).** The seal **(134)** extends from the inner side **(150)** of the spool cover **(106)** facing the spool **(104)** along the stem **(128)** of the bump button **(126)** to the upper surface **(122)** of the spool **(104).** The seal **(134)** also comprises a second coupling feature **(132)** configured to couple with the first coupling feature **(130)** formed on the upper surface **(122)** of the spool **(104),** further allowing the seal **(134)** and the spool **(104)** to cooperate therewith.

## Description

### TECHNICAL FIELD

The present disclosure relates to a filament trimmer head. More particularly, the present disclosure relates to the filament trimmer head comprising a spool, a spool holder, and a spool cover.

### BACKGROUND

Filament trimmers are used to trim grass, weeds, and similar vegetation. They typically comprise an elongated handle assembly with a hand grip at an upper end and a filament trimmer head rotatably mounted at a lower end. The filament trimmer head houses a spool that holds a coiled filament line, with a free end of this line extending outwardly from the head. When the filament trimmer's motor is activated, the filament trimmer head rotates, causing the free end of the filament line to spin around the drive shaft's rotational axis, enabling it to cut through vegetation.

The filament trimmer heads typically use an indexing system that unlocks the spool to feed out more filament line when needed, often activated by bumping the filament trimmer head against the ground. However, ground bump systems are vulnerable to contamination from dirt and debris, which may damage the indexing mechanism and require disassembly for cleaning or repair.

An example of filament trimmer head is provided by United States patent US 6,279,235 B1 (hereinafter referred to as '235 reference). The '235 reference discloses an improved trimmer head with a spool that includes crush ribs to prevent damage from filament contraction. It has a slot-shaped exit aperture that opens during disassembly for easier filament placement and closes when assembled to limit vertical movement. The trimmer head also incorporates a line indexing system with teeth on a spool core extension, a dirt seal to protect the indexing system, and a self-threading drive shaft that forms attachment threads as the trimmer head is mounted.

### SUMMARY OF THE INVENTION

In view of the above, it is an objective of the present invention to solve or at least reduce the drawback discussed above. The objective is achieved by providing a filament trimmer head.

According to an aspect of the present invention, the filament trimmer head comprises a spool holder, and a spool mounted within the spool holder. The spool comprises a core, and an upper surface and a lower surface secured to the core at spaced-apart locations, and extending substantially perpendicularly outward from the core. The spool also comprises a filament line wound around the core, such that the filament line is contained between the upper surface and the lower surface. The filament trimmer head also comprises a spool cover covering the spool, such that the spool cover further comprises a circular through hole. The filament trimmer head further comprises a bump button that is via it's stem formed or positioned on the upper surface of the spool, extending outward through the circular through hole of the spool cover. The filament trimmer head also comprises a first coupling feature formed on the upper surface of the spool, and extending towards the bump button. The filament trimmer head is characterized in that a seal is configured to engage and surround the stem of the bump button, wherein the seal extends from the inner side of the spool cover facing the spool along the stem of the bump button to the upper surface of the spool. The seal also comprises a second coupling feature on the seal, wherein the second coupling feature is configured to couple with the first coupling feature formed on the upper surface of the spool, further allowing the seal and the spool to cooperate therewith.

The present disclosure provides an improved filament trimmer head that is designed with better seal and coupling features to improve its performance and durability. The seal around the stem of the bump button acts as a protective barrier, keeping dirt, moisture, and debris from getting into the spool. This may help the spool last longer and keep the filament line in good condition by reducing wear and contamination. The seal also has the second coupling feature that connects securely with the first coupling feature on the spool, making sure the parts stay tightly together. This may not only help the bump button work more smoothly but may also make it easier to assemble and maintain by keeping the seal in place.

According to an exemplary embodiment of the invention, the first coupling feature is one or more ribs formed on the upper surface of the spool. The one or more ribs may create a reliable grip that may help prevent the seal from slipping or shifting out of place during operation. In other words, the one or more ribs may enhance the overall stability and reliability of the filament trimmer head, ensuring that the seal remains in its intended position to protect against debris and moisture. Additionally, the ribs may contribute to the ease of assembly by allowing for a simple yet effective way to secure the seal, reducing the potential for errors and improving the durability of the filament trimmer head over time.

According to an exemplary embodiment of the invention, the one or more ribs may be evenly spaced along the upper surface of the spool. According to an exemplary embodiment of the invention, the one or more ribs may be tapered along their length to provide an enhanced grip with the seal. According to an exemplary embodiment of the invention, the one or more ribs may be formed integrally with the upper surface of the spool during the molding process. According to an exemplary embodiment of the invention, the one or more ribs may be configured to distribute force evenly across the surface of the seal during operation.

According to an exemplary embodiment of the invention, the second coupling feature is one or more indents formed on the seal. The second coupling feature on the seal may provide a precise and secure fit with the first coupling feature, such as the one or more ribs on the spool. These one or more indents may enhance the overall stability of the seal, ensuring it stays in place and does not shift or dislodge during operation. Additionally, the one or more indents may make the assembly process simpler and more reliable, reducing the risk of improper installation and enhancing the durability of the filament trimmer head. Further, the one or more indents may also help distribute pressure more evenly, which may reduce wear on both the seal and the spool, contributing to longer-lasting performance.

According to an exemplary embodiment of the invention, the one or more indents may be positioned to provide a snap-fit connection with the first coupling feature on the spool for easier assembly. According to an exemplary embodiment of the invention, the one or more indents may be formed with varying depths to allow for adjustable pressure distribution when the seal is coupled with the spool.

According to an exemplary embodiment of the invention, the seal is configured to engage and surround the stem of the bump button through an interference fit. The interference fit may ensure that the seal stays firmly in place, preventing any movement or shifting during operation, which may help avoid wear and tear on both the seal and the bump button. The interference fit may also enhance the overall sealing effectiveness, creating a strong barrier that protects the spool assembly from debris, dirt, and moisture.

According to an exemplary embodiment of the invention, the interference fit between the seal and the stem of the bump button may be achieved through a compressible material of the seal that adapts to the shape of the stem. According to an exemplary embodiment of the invention, the interference fit may be configured to resist axial and rotational movement of the seal relative to the stem during operation of the trimmer. According to an exemplary embodiment of the invention, the interference fit between the seal and the stem of the bump button may be configured to be easily engaged during assembly without requiring additional tools. According to an exemplary embodiment of the invention, the interference fit may be designed to prevent the seal from being dislodged or displaced even under high vibration or heavy use conditions.

According to an exemplary embodiment of the invention, the spool cover, the seal, and the spool are configured to engage with each other through an interference fit. The interference fit may ensure that the components are securely held together, preventing any movement or misalignment during operation, which may help maintain the integrity of the entire filament trimmer head assembly. Further, by creating a strong seal between the spool cover, spool, and seal, the interference fit may also provide superior protection against the intrusion of debris, moisture, and dirt, keeping the internal components of the filament trimmer head clean and operational for longer. Additionally, this design may minimize the need for additional fasteners or tools, simplifying assembly and maintenance.

According to an exemplary embodiment of the invention, the seal, and the bump button are rotationally coupled in a manner that the rotation of one causes the rotation of the other. This design may ensure that the bump button and seal may work together seamlessly during trimmer head use, preventing misalignment or jamming of parts. The synchronized rotation may help maintain consistent pressure and engagement between the seal and the spool, improving the overall sealing effectiveness and preventing leakage of moisture or debris. Additionally, this rotational coupling may reduce wear by ensuring even distribution of force across both components, enhancing their durability. Further, this design may simplify the operation and maintenance of the filament trimmer head by minimizing the risk of malfunction or component failure.

According to an exemplary embodiment of the invention, the seal further comprises a raised lip extending outwardly to at least partially engage with the circular through hole in the spool cover. This design may ensure a tighter, more secure connection between the seal and the spool cover, helping to prevent any unwanted gaps that may potentially allow moisture, dirt, or debris to enter the spool assembly. Further, by partially engaging with the through hole in the spool cover, the raised lip may also help stabilize the seal during operation, reducing the likelihood of shifting or displacement under pressure.

According to an exemplary embodiment of the invention, the seal is formed from a flexible elastomeric material. The flexibility of the elastomeric material may help the seal maintain its shape and performance over time, even under varying temperatures or repeated use. The seal may preferably be a rubber seal.

According to an exemplary embodiment of the invention, the one or more indents have a triangular cross-section, and the one or more ribs have a triangular cross-section. The triangular cross-section may allow for a more secure and efficient interlocking between the one or more indents and the one or more corresponding ribs, as the sharp angles may provide a firm grip that may resist movement or slippage during operation.

According to an exemplary embodiment of the invention, the one or more indents have a U-shaped cross-section, and the one or more ribs have a U-shaped cross-section. The U-shape cross-section may allow for better distribution of pressure across the engagement points, ensuring a tight, even seal that may minimize the risk of leaks or misalignment. Further, the U-shaped cross-section may make it easier to assemble the parts while ensuring they remain securely coupled throughout the life of the filament trimmer head, ultimately improving its overall performance, reliability, and longevity.

Before discussing the invention with the help of the drawings the invention will be briefly discussed in general. The present disclosure provides a rubber seal between a spool and a spool cover of a filament trimmer head to prevent the grass from entering the spool or a spool holder mounting the spool. The rubber sealing is interference fit with a stem of a bump button to prevent fall off or missing risk when a user disassembles the spool cover. The rubber sealing is assembled with the spool for service part, easier for the user to replace the spool. After assembling the spool cover, there is also interference fit between the spool cover, the rubber sealing, and the spool to prevent that the rubber sealing has any play or movement risk when using.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates an exploded view of a filament trimmer head, according to an exemplary embodiment of the present invention;
**FIG. 2** illustrates a cross-sectional view of a filament trimmer head, according to an exemplary embodiment of the present invention;
**FIG. 3** illustrates an exploded view of a seal, and a spool mounted within a spool holder, according to an exemplary embodiment of the present invention; and
**FIG. 4** illustrates an assembled view of a seal, and a spool mounted within a spool holder, according to an exemplary embodiment of the present invention.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

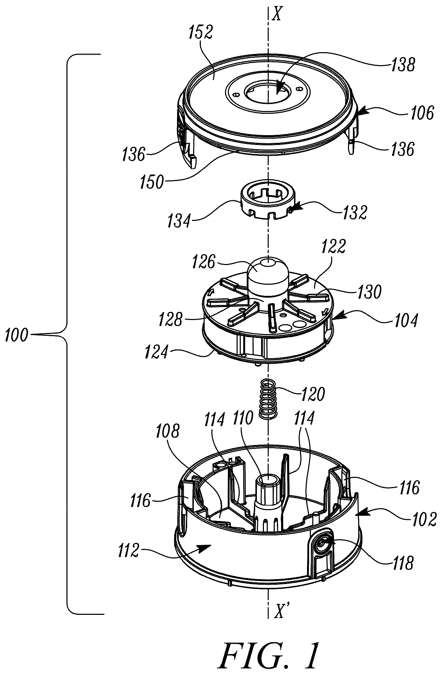

**FIG. 1** illustrates an exploded view of a filament trimmer head **100.** The filament trimmer head **100** includes a spool holder **102,** a spool **104,** and a spool cover **106.** The spool holder **102,** the spool **104,** and the spool cover **106** are configured to be removably coupled to each other, with their coupling aligned along the central axis **X-X'** of the filament trimmer head **100.**

The spool holder **102** is configured as a foundational component for securely supporting the spool **104** within the filament trimmer head **100.** The spool holder **102** includes a base plate **108,** with an integrally formed or removably attached shaft **110** aligned along the central axis **X-X'** of the filament trimmer head **100.** During assembly, a spring **120** is configured to be placed at least partially within the shaft **110,** followed by the mounting of the spool **104** around both the spring **120** and the shaft **110.**

Further, the spool holder **102** includes a wall **112,** which extends upward from the base plate **108,** forming a continuous, substantially cylindrical structure that securely encircles the spool **104.** The wall **112** includes one or more supporting structures **114,** which at least partially extend along the wall **112,** as well as at least partially extend along the base plate **108.** The one or more supporting structures **114** are configured to substantially enhance the structural integrity of the spool holder **102** and provide support to the spool **104** during operation of the filament trimmer head **100.** The one or more supporting structures **114** are oriented toward the shaft **110.** The wall **112** also includes one or more coupling structures **116,** which are configured to allow removable coupling between the spool holder **102** and the spool cover **106** during the assembly of the filament trimmer head **100.** The one or more coupling structures **116** are oriented away from the shaft **110.** The wall **112** further includes an aperture **118.**

With continuous reference to **FIG. 1****,** the spool **104** of the filament trimmer head **100** includes a cylindrical elongated body, with an upper surface **122** and a lower surface **124** spaced apart from the upper surface **122.** During assembly, the lower surface **124** is configured to at least partially engage with the base plate **108,** and/or the one or more supporting structures **114.** The upper surface **122** of the spool **104** includes a bump button **126** that is via it's stem **128** formed or positioned on the upper surface **122** of the spool **104.** A first coupling feature **130** is also formed on the upper surface **122** of the spool **104,** such that the first coupling feature **130** is configured to couple with a second coupling feature **132** included with a seal **134,** when the seal **134** engages and surrounds the stem **128** of the bump button **126,** during the assembly of the filament trimmer head **100.**

Further, when the spool holder **102,** the spool **104,** the spring **120,** and the seal **134** are assembled, the spool cover **106** is configured to cover the spool **104** and the seal **134.** The spool cover **106** includes one or more coupling structures **136** that are configured to engage with the corresponding one or more coupling structures **116** provided with the spool holder **102** to complete the filament trimmer head **100.** The spool cover **106** includes an inner side **150** and an outer side **152** opposite to the inner side **150,** such that the one or more coupling structures **136** extend from the inner side **150.** Further, once the filament trimmer head **100** is assembled, the bump button **126** extends outward through a circular through hole **138** of the spool cover **106.** The circular through hole **138** is carved substantially at the center of the spool cover **106,** such that it aligns with the central axis **X-X'** of the filament trimmer head **100.**

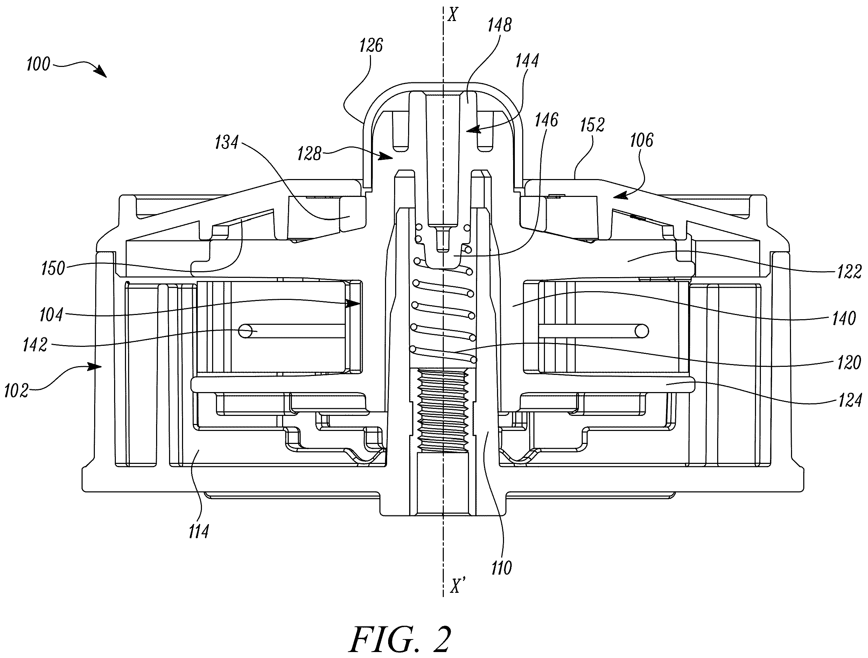

**FIG. 2** illustrates a cross-sectional view of the filament trimmer head **100.** The filament trimmer head **100** includes the spool **104** that further includes a core **140.** The core **140** is a hollow body that is configured to allow insertion of the spring **120** and the shaft **110,** when the spool **104** is removably mounted on the spool holder **102.** The spool **104** also includes the upper surface **122** and the lower surface **124** secured to the core at spaced-apart locations. The upper surface **122** and the lower surface **124** extend substantially perpendicularly outward from the core **140.** In other words, the upper surface **122** and the lower surface **124** extend substantially perpendicularly relative to the central axis **X-X'.** Additionally, the spool **104** includes a filament line **142** wound around the core **140,** such that the filament line **142** is contained between the upper surface **122** and the lower surface **124.**

The filament trimmer head **100** also includes the spool cover **106** covering the spool **104,** such that the spool cover **106** further includes the circular through hole **138.** The filament trimmer head **100** further includes the bump button **126** that is via it's stem **128** formed or positioned on the upper surface **122** of the spool **104** and extends outward through the circular through hole **138** of the spool cover **106.** The stem **128** on its inner surface engages with a transmission shaft **144,** which further engages at least partially with the spring **120** and the shaft **110** proximal its first end **146** and with the inner surface of the bump button **126** proximal its second end **148.** The transmission shaft **144** is configured to transmit forces between the bump button **126** and the spool **104** via the spring **120.** In other words, the transmission shaft **144** is configured to allow a movement of the spool **104** between an upper position and a lower position. The spring **120** is configured to normally bias the spool **104** to its lowered position. However, if the filament trimmer head **100** is tapped on the ground by a user, the engagement of bump button **126** with the ground transmit forces on the spool **104** via the transmission shaft **144** and moves the spool **104** upwardly relative to filament trimmer head **100** to its raised position. When the filament trimmer head **100** is lifted up off the ground, the spring **120** is effective to move the spool **104** back down to its lowered position.

With continuous reference to **FIG. 2****,** the filament trimmer head **100** includes the seal **134.** The seal **134** is formed from a flexible elastomeric material. The seal **134** is configured to engage and surround the stem **128** of the bump button **126.** The seal **134** extends from the inner side **150** of the spool cover **106** facing the spool **104** along the stem **128** of the bump button **126** to the upper surface **122** of the spool **104.** According to an exemplary embodiment of the invention, the seal **134** further includes a raised lip extending outwardly to at least partially engage with the circular through hole **138** in the spool cover **106.** Further, the spool cover **106,** the seal **134,** and the spool **104** are configured to engage with each other through the interference fit.

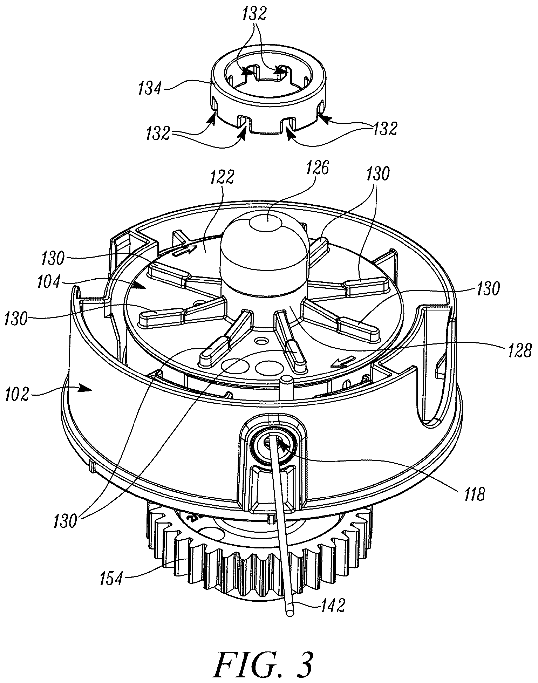

**FIG. 3** illustrates an exploded view of the seal **134,** and the spool **104** mounted within the spool holder **102.** The filament trimmer head **100** includes the first coupling feature **130** formed on the upper surface **122** of the spool **104.** The first coupling feature **130** extends towards the bump button **126,** in particular, towards the stem **128** of the bump button **126.** The first coupling feature **130** is one or more ribs formed on the upper surface **122** of the spool **104.** The one or more ribs have a U-shaped cross-section.

Further, the seal **134** includes the second coupling feature **132** on the seal **134.** The second coupling feature **132** is configured to couple with the first coupling feature **130** formed on the upper surface **122** of the spool **104.** The second coupling feature **132** allows the seal **134** and the spool **104** to cooperate therewith. The second coupling feature **132** is one or more indents formed on the seal **134.** The one or more indents have a U-shaped cross-section. According to an exemplary embodiment of the invention, the one or more indents have a triangular cross-section, and the one or more ribs have a triangular cross-section.

During operation of the filament trimmer head **100,** a motor (not shown) rotates the spool **104** inside the filament trimmer head **100** via a transmission mechanism **154,** such that as the motor runs, the spool **104** spins rapidly, causing the filament line **142** to be pulled out through the aperture **118.** Further, the seal **134** and the spool **104**are rotationally coupled in a manner that the rotation of the spool **104** causes the rotation of the seal **134.** In other words, during rotation of the spool **104,** the seal **134** and the bump button **126** rotate together due to the cooperation between the first coupling feature **130** and the second coupling feature **132.**

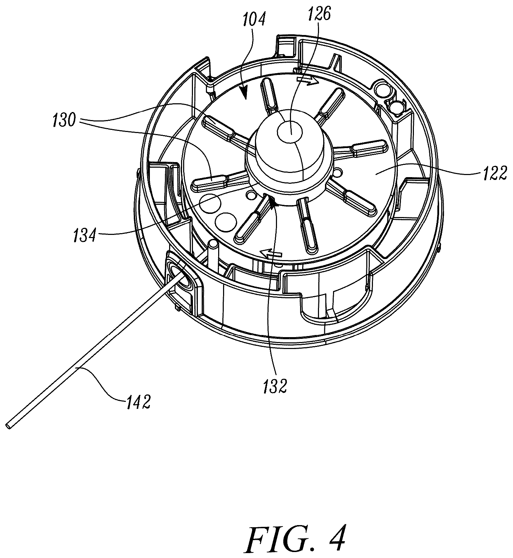

**FIG. 4** illustrates an assembled view of the seal **134,** and the spool **104** mounted within the spool holder **102.** In the assembled or coupled state of the seal **134** and the spool **104** due to the removable cooperation between the first coupling feature **130** and the second coupling feature **132,** the seal **134** is configured to engage and surround the stem **128** of the bump button **126** through an interference fit.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Filament Trimmer Head
- **102**: Spool Holder
- **104**: Spool
- **106**: Spool Cover
- **108**: Base Plate
- **110**: Shaft
- **112**: Wall
- **114**: Supporting Structures
- **116**: Coupling Structures
- **118**: Aperture
- **120**: Spring
- **122**: Upper Surface
- **124**: Lower Surface
- **126**: Bump Button
- **128**: Stem
- **130**: First Coupling Feature
- **132**: Second Coupling Feature
- **134**: Seal
- **136**: Coupling Structures
- **138**: Circular Through Hole
- **140**: Core
- **142**: Filament Line
- **144**: Transmission Shaft
- **146**: First End
- **148**: Second End
- **150**: Inner Side
- **152**: Outer Side
- **154**: Transmission Mechanism
- **X-X'**: Central Axis

## Claims

1. A filament trimmer head **(100)** comprising:
a spool **(104)** mounted within a spool holder **(102),** the spool (**104**) comprising:
a core **(140),**
an upper surface **(122)** and a lower surface **(124)** secured to the core **(140)** at spaced-apart locations, and extending substantially perpendicularly outward from the core **(140),**
and
a filament line **(142)** wound around the core **(140),** the filament line **(142)** being contained between the upper surface **(122)** and the lower surface **(124);**
a spool cover **(106)** covering the spool **(104),** the spool cover **(106)** comprising a circular through hole **(138);**
a bump button **(126)** that is via it's stem **(128)** formed or positioned on the upper surface **(122)** of the spool **(104),** extending outward through the circular through hole **(138)** of the spool cover **(106);** and
a first coupling feature **(130)** formed on the upper surface **(122)** of the spool **(104),** and extending towards the bump button **(126);**
**characterized in that:**
a seal **(134)** configured to engage and surround the stem **(128)** of the bump button **(126),** wherein the seal **(134)** extends from the inner side **(150)** of the spool cover **(106)** facing the spool **(104)** along the stem **(128)** of the bump button **(126)** to the upper surface **(122)** of the spool **(104);** and
the seal **(134)** comprising a second coupling feature **(132)** on the seal **(134),** wherein the second coupling feature **(132)** is configured to couple with the first coupling feature **(130)** formed on the upper surface **(122)** of the spool **(104),** further allowing the seal **(134)** and the spool (**104**) to cooperate therewith.

2. The filament trimmer head **(100)** according to claim 1,
wherein the first coupling feature **(130)** is one or more ribs formed on the upper surface **(122)** of the spool **(104).**

3. The filament trimmer head **(100)** according to any one of the preceding claims,
wherein the second coupling feature **(132)** is one or more indents formed on the seal **(134).**

4. The filament trimmer head **(100)** according to any one of the preceding claims,
wherein the seal **(134)** being configured to engage and surround the stem **(128)** of the bump button **(126)** through an interference fit.

5. The filament trimmer head **(100)** according to any one of the preceding claims,
wherein the spool cover **(106),** the seal **(134),** and the spool **(104)** being configured to engage with each other through an interference fit.

6. The filament trimmer head **(100)** according to any one of the preceding claims,
wherein the seal **(134),** and the bump button **(126)** being rotationally coupled in a manner that the rotation of one causes the rotation of the other.

7. The filament trimmer head **(100)** according to any one of the preceding claims,
wherein the seal **(134)** further comprising a raised lip extending outwardly to at least partially engage with the circular through hole **(138)** in the spool cover (**106**).

8. The filament trimmer head **(100)** according to any one of the preceding claims,
wherein the seal **(134)** is formed from a flexible elastomeric material.

9. The filament trimmer head **(100)** according to any of the claims 2-3, wherein the one or more indents have a triangular cross-section, and the one or more ribs have a triangular cross-section.

10. The filament trimmer head **(100)** according to any of the claims 2-3, wherein the one or more indents have a U-shaped cross-section, and the one or more ribs have a U-shaped cross-section.
